# EUROPEAN PATENT SPECIFICATION

(11) **EP 3 183 889 B1**
(45) Date of publication and mention of the grant of the patent: **15.05.2019**
(21) Application number: 15727162.8
(22) Date of filing: 15.05.2015
(51) Int. Cl.: H04Q 1/02

(54) **LED PULL TABS FOR PLUGGABLE TRANSCEIVER MODULES AND ADAPTOR MODULES**
LED-ZUGLASCHEN FÜR EINSTECKBARE SENDER-EMPFÄNGER-MODULE UND ADAPTERMODULE
TIRETTES DEL POUR MODULES D'ÉMETTEURS-RÉCEPTEURS ET MODULES D'ADAPTATEURS ENFICHABLES

(30) Priority: 24.08.2014 US 201414467033
(43) Date of publication of application: 28.06.2017
(73) Proprietor: Cisco Technology, Inc., San Jose, CA 95134 (US)
(72) Inventor: TANG, Norman, San Jose, CA 95134 (US); HANSSEN, Steven A., San Jose, CA 95134 (US); LAI, David, San Jose, CA 95134 (US); PENG, Liang Ping, San Jose, CA 95134 (US); NGUYEN, Anthony, San Jose, CA 95134 (US)
(74) Representative: Kazi, Ilya
(86) International application number: PCT/US2015/031214
(87) International publication number: WO 2016/032581

(56) References cited:
- WO-A1-2011/100613
- US-A1- 2003 214 789
- US-A1- 2010 178 783
- US-A1- 2014 035 755
- US-A1- 2014 223 585
- US-B1- 6 876 838

## Description

### TECHNICAL FIELD

The present disclosure relates to pluggable transceiver modules and adaptor modules. In particular, the present disclosure relates to pull tabs for pluggable transceiver modules and adaptor modules with one or more light-emitting diodes (LEDs).

### BACKGROUND

Network communication devices may be used to transmit and/or receive data between various computing devices (e.g., server computers, desktop computers, laptop computers, tablet computers, databases, etc.), other network communication devices, and/or networks (e.g., public networks such as the Internet and/or private networks such as local area networks (LANs) or virtual private networks (VPNs)). Examples of network communication devices include, but are not limited to, network switches, network routers, network hubs, blade switches, etc. The network communication devices may include slots to receive pluggable transceiver modules (e.g., modules that may be used to couple the network communication devices to the various computing devices, network communication devices, and/or networks). The network communication may include light emitting diodes (LEDs). The LEDs may be used to indicate the status of a pluggable transceiver module and/or the status of a network connection (e.g., a physical communication channel and/or a logical communication channel).

WO 2011/100613 discloses a fiber panel system that includes a chassis and at least a first blade configured to moveably mount to the chassis. Each blade includes a base, a frame, and front couplers. The base of each blade defines at least one opening at a location spaced rearwardly from the front couplers. US 2014/035755 discloses a communication device that includes a communication module including an illumination source and a body element. The body element is configured to allow illumination generated by the illumination source to propagate within and illuminate at least a portion of an outer surface of the body element

### BRIEF DESCRIPTION OF THE FIGURES

The present disclosure will be understood more fully from the detailed description given below and from the accompanying drawings of some embodiments and/or illustrative implementations of the present disclosure, which, however, should not be taken to limit the present disclosure to the specific embodiments, but are for explanation and understanding only.
Figure 1 is a diagram illustrating an example network communication device, according to one embodiment of the present disclosure.
Figure 2A is a diagram illustrating an exploded perspective view of a pluggable transceiver module, according to one embodiment of the present disclosure.
Figure 2B is a diagram illustrating a portion of the pluggable transceiver module illustrated in Figure 2A, according to one embodiment of the present disclosure.
Figure 2C is a diagram illustrating a portion of the pluggable transceiver module illustrated in Figure 2A, according to another embodiment of the present disclosure.
Figure 3 is a diagram illustrating a perspective view of the pluggable transceiver module illustrated in Figure 2A, according to one embodiment of the present disclosure.
Figure 4 is a diagram illustrating a perspective view of the pluggable transceiver module illustrated in Figure 2A, according to another embodiment of the present disclosure.
Figure 5 is a diagram illustrating a perspective view of a pluggable transceiver module and an adaptor module, according to one embodiment of the present disclosure.
Figure 6 is a flowchart representation of a method of using a pluggable transceiver module having one or more features as described herein, according to one embodiment of the present disclosure.

In accordance with common practice, various features shown in the drawings may not be drawn to scale as the dimensions of various features may be arbitrarily expanded or reduced for clarity. Moreover, the drawings may not depict all of the aspects and/or variants of a given system, method and/or device disclosed by the present disclosure. Finally, like reference numerals may be used to denote like features throughout the specification and figures.

### DETAILED DESCRIPTION

Numerous details are described herein in order to provide a thorough understanding of the illustrative implementations shown in the accompanying drawings. However, the accompanying drawings show only some example aspects of the present disclosure and are therefore not to be considered limiting. Those of ordinary skill in the art will appreciate from the present disclosure that other effective aspects and/or variants do not include all of the specific details described herein. Moreover, well-known systems, methods, components, devices and circuits have not been described in exhaustive detail so as not to unnecessarily obscure more pertinent aspects of the implementations described herein. Thus, the specific details set forth are merely examples. Particular implementations may vary from these example details and still be contemplated to be within the scope of the present disclosure.

Various embodiments disclosed herein include apparatuses, systems, and methods for providing pull tabs for pluggable transceiver modules and/or adaptor modules. In one embodiment, a pluggable transceiver module may include a pull tab that may have a visual indicator portion to provide a visual indication of the status of a pluggable transceiver module and/or the status of a network connection. The pluggable transceiver module may also include one or more LEDs, one or more wires, one or more light pipes, one or more latching components, and/or one or more tension components. In another embodiment, an adaptor module may include a pull tab that may have a visual indicator portion to provide a visual indication of whether a pluggable transceiver module is compatible with the adaptor module. The adaptor module may also include one or more LEDs, one or more wires, one or more light pipes, one or more latching components, and/or one or more tension components.

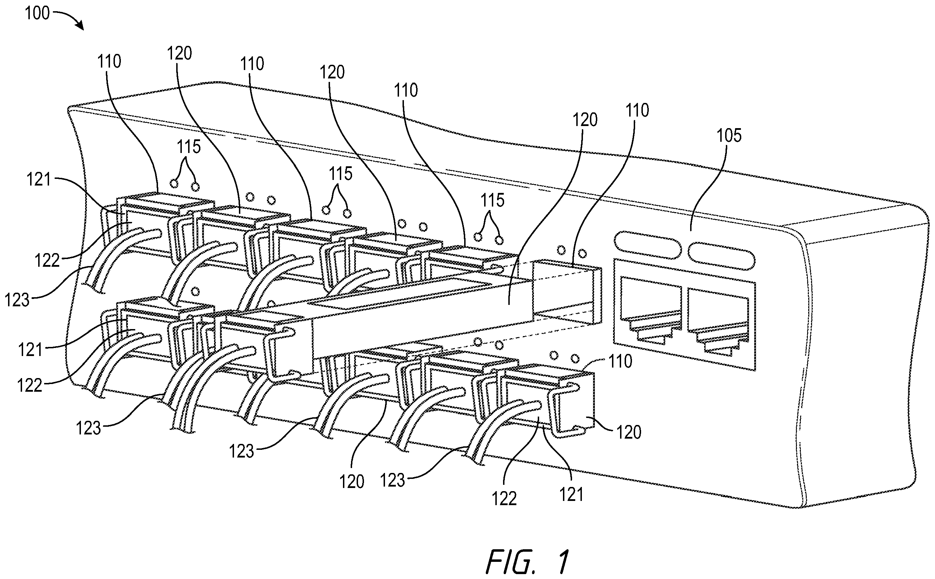

Figure 1 is a diagram illustrating an example network communication device 100, according to one embodiment of the present disclosure. The network communication device 100 may be a device that may transmit and/or receive data between various computing devices (e.g., server computers, desktop computers, laptop computers, tablet computers, databases, etc.), other network communication devices (e.g., other network switches/routers), and/or networks (e.g., public networks such as the Internet and/or private networks such as local area networks (LANs) or virtual private networks (VPNs). Examples of network communication devices may include, but are not limited to, network switches, network routers, network hubs, blade switches, etc.

As illustrated in Figure 1, the network communication device 100 includes a plurality of slots 110 positioned on the front face 105 of the network communication device 100. The slots 110 are arranged two rows of six slots 110 each. It shall be understood that the number and/or arrangement of the slots 110 is merely an example. In other embodiments, the network communication device 100 may include any number of slots 110 and/or the slots 110 may be arranged in various layouts. Each slot is associated with two light emitting diodes (LEDs) 115. The two LEDs 115 associated with a slot 110 may be positioned above the slot 110. The LEDs 115 may be configured to provide an indication (e.g., a visual indication) of the status of a pluggable transceiver module 120 and/or the status of a network connection (as discussed in more detail below).

Each of the slots 110 may be configured to receive a pluggable transceiver module 120. A pluggable transceiver module 120 may be a device that is configured to receive cables/cable connectors and that may transmit and/or receive data via the cables/cable connectors. The pluggable transceiver module 120 allows the network communication device (e.g., the switch, the router, etc.) to form network connections with other computing devices and/or other network communication devices (via the cables/cable connectors). Examples of pluggable transceiver modules may include, but are not limited to, small form-factor pluggable (SFP) transceiver modules, optical transceiver modules, copper transceiver modules, etc.

In one embodiment, the network communication device 100 may be capable of operating with different types of pluggable transceiver modules. For example, a first pluggable transceiver module may be an optical transceiver module (e.g., a pluggable transceiver module that may be coupled to a fiber optic cable) and a second transceiver module may be copper transceiver module (e.g., a pluggable transceiver module that may be coupled to a copper cable, such as an Ethernet cable).

Each of the pluggable transceiver modules 120 may include a port 121. The ports 121 may be configured to receive cable connectors 122. The cable connectors 122 may be used to couple cables 123 to the network communication device 100. Examples of types of cables 123 may include, but are not limited to, fiber optic cables, Ethernet cables (e.g., copper cables), etc. One or more network connections (e.g., physical and/or logical communication channels) may be established between the network communication device 100 and various other devices via the pluggable transceiver modules 120, the ports 121, the cable connectors 122, and/or the cables 123. For example, the cable connector 122 may be used to connect a fiber optic cable to a port 121 and a network connection may be established between the network communication device 100 and another network communication via the fiber optic cable and/or the port 121.

The pluggable transceiver modules 120 may have thermal (e.g., temperature) constraints and/or requirements in order for the pluggable transceiver modules 120 to operate properly. For example, a pluggable transceiver module 120 may include a laser for use with a fiber optic cable (e.g., the pluggable transceiver module 120 may use the laser to transmit and/or receive data). The laser may not operate properly and/or reliably when the temperature within the case (e.g., housing) of the network communication device 100 exceeds a threshold temperature (e.g., when the temperature within case of the network communication device exceeds 70 °C). In addition, as newer pluggable transceiver modules 120 are developed and/or manufactured, the newer pluggable transceiver modules may support higher data rates. The newer pluggable transceiver modules may also have smaller form factors (e.g., the housing of the newer pluggable transceiver modules may be smaller) in order to increase the number of slots in the network communication device 100. These factors (e.g., higher data rates and/or smaller form factors) may increase the amount of heat generated by the newer pluggable transceiver modules. The increased heat generated by the newer pluggable transceiver modules may increase the temperature within the case of the network communication device 100.

In one embodiment, the network communication device 100 may cool and/or lower the temperature within the case of the network communication device 100 by generating airflow (e.g., front-to-back airflow) through the case of the network communication device 100. For example, the network communication device 100 may include one or more fans (not shown in the figures) that may draw air from the front face 105 of the network communication device 100 and may blow/push the air towards the back of the network communication device 100.

As illustrated in Figure 1, the network communication device 100 includes LEDs 115 configured to provide a visual indication of the status of the pluggable transceiver modules 120 and/or the status of a network connection. These LEDs 115 use space on the front face 105 of the network communication device. The LEDs 115 may reduce the amount of area on the front face 105 where air may be drawn in and this may affect the cooling of the network communication device 100 (e.g., may affect the cooling of the inside of the case of the network communication device). Also, the LEDs 115 may use wiring (e.g., to power the LEDs) and/or light pipes. The wiring and/or light pipes may also obstruct the flow of air through the case of the network communication device 100. This may also affect the cooling of the network communication device 100.

In addition, as the pluggable transceiver modules 120 get smaller (e.g., the form factor and/or the size of the transceiver modules is reduced), the number of slots 110 and the number of pluggable transceiver modules 120 may increase. This may also generate more heat and may affect the cooling of the network communication device 100 (e.g., may affect the cooling of the inside of the case of the network communication device). Moreover, the cables 123 may also obstruct the view of the one or more of the LEDs 115. For example, the cables 123 that are coupled to the pluggable transceiver modules 120 (via the ports 121 and the cable connectors 122) in the top row of pluggable transceiver modules 120 may obstruct the view of the LEDs 115 that are below the top row of pluggable transceiver modules 120.

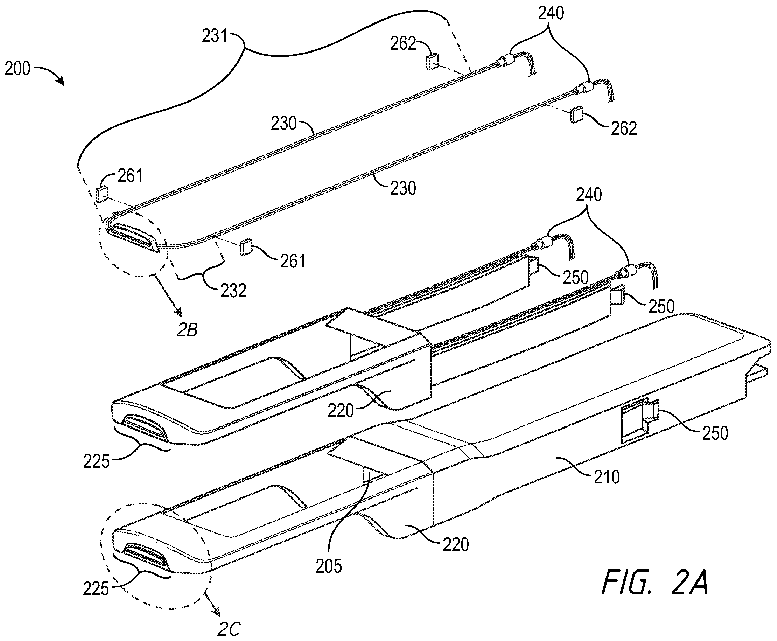

Figure 2A is a diagram illustrating an exploded perspective view of a pluggable transceiver module 200, according to one embodiment of the present disclosure. As discussed above, the pluggable transceiver module 200 may be a device that is configured to receive cables/cable connectors and that may transmit and/or receive data via the cables/cable connectors. The pluggable transceiver module 120 allows the network communication device (e.g., the switch, the router, etc.) to form network connections with other computing devices and/or other network communication devices (via the cables/cable connectors). Examples of pluggable transceiver modules may include, but are not limited to, SFP transceiver modules, optical transceiver modules, copper transceiver modules, etc. Also as discussed above, the pluggable transceiver module 200 may be inserted into (e.g., placed into, installed into, plugged into, etc.) a slot of a network communication device (e.g., inserted into slot 110 of network communication device 100 illustrated in Figure 1).

The pluggable transceiver module 200 includes a housing 210. The housing 210 may be constructed using various types of materials. For example, the housing 210 may be constructed using one or more of plastics, polymers, metals (e.g., steel, aluminum, etc.), and metal alloys. The housing 210 may have a form factor that allows the pluggable transceiver module 200 to be placed in the slot of the network communication device. For example, the housing 210 may have dimensions (e.g., height, width, length) and/or a shape that allows the pluggable transceiver module 200 to fit within the slot of the network communication device (e.g., fit securely within the slot of the network communication device). The housing 210 includes a port 205 (e.g., a cavity, an opening, etc.) that allows a cable connector to be inserted into (e.g., placed into, installed into, plugged into, etc.) the pluggable transceiver module 200 (as illustrated in Figure 1). In other embodiments, the housing 210 may have any number of ports configured to receive any number of cable connectors.

The pluggable transceiver module 200 also includes latching components 250. The latching components 250 may help secure the pluggable transceiver module 200 in the slot of the network communication device. In one embodiment, the latching components 250 may be deformable, retractable, and/or movable tabs (e.g., abutments). For example, the latching components 250 may be metal tabs or prongs that are retractable and/or movable using a spring. The retractable and/or movable tabs may extend past the outer surface of the housing 210 in a first state and/or configuration (e.g., in a latched state and/or configuration). The retractable and/or movable tabs may fit within holes and/or openings in the slot of the network communication device. The retractable and/or movable tabs may contact the surface of the holes and/or openings and may inhibit the movement of the pluggable transceiver module 200. For example, the retractable and/or movable tabs may prevent the pluggable transceiver module 200 from being removed from the slot of the network communication device when the retractable and/or movable tabs are in the first state and/or configuration (e.g., in a latched state and/or configuration). In other embodiments, the latching components 250 may include various other components, such as tabs, prongs, notches, ridges, latches, grooves, openings, springs, wheels, gears, and/or other mechanisms that may secure (e.g., inhibit the movement of) the pluggable transceiver module 200 in the slot of the network communication device. In other embodiments, the pluggable transceiver module 200 may include a different number of latching components and/or may have latching components in different positions on the housing 210.

The pluggable transceiver module 200 also includes a pull tab 220. In one embodiment, the pull tab 220 may facilitate the removal of the pluggable transceiver module 200 from the slot of the network communication device. For example, the pull tab 220 may disengage the latching components 250 of the pluggable transceiver module 200 when a force is exerted on the pull tab 220 (e.g., when the pull tab is pulled in a direction away from the network communication device). As discussed above, the latching components 250 may be retractable and/or movable tabs. When the force is exerted on the pull tab 220, the retractable and/or movable tags may transition (e.g., change) to a second state and/or configuration (e.g., in an unlatched state and/or configuration). For example, exerting a force (e.g., pulling) the pull tab 220 may compress a spring and/or deform the tabs (e.g., may cause the tabs to deform towards the inside of the housing 210). In the second state and/or configuration, the retractable and/or movable tabs may not extend past the outer surface of the housing 210. The retractable and/or movable tabs may not contact the surface of the holes and/or openings in the second state and/or configuration. This may allow for movement of the pluggable transceiver module. For example, the retractable and/or movable tabs may no longer prevent the pluggable transceiver module 200 from being removed from the slot of the network communication device when the retractable and/or movable tabs are in the second state and/or configuration (e.g., in the unlatched state and/or configuration).

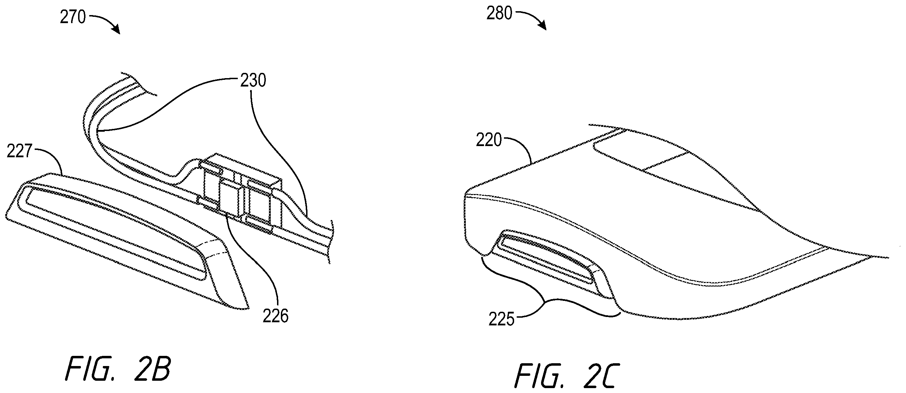

The pluggable transceiver module 200 also includes a visual indicator portion 225. The visual indicator portion 225 may include an LED (as illustrated and discussed in more detail in conjunction with Figure 2B). The visual indicator portion 225 may emit (e.g., transmit) visual light in one or more different colors (e.g., red, green, blue, orange, yellow, etc.). The visual indicator portion 225 may also emit (e.g., transmit) visual light intermittently and/or periodically. For example, the visual indicator portion 225 may blink (e.g., may transmit light for a period of time and may not transmit light for a period of time) at various speeds (e.g., blink quickly or blink slowly). The visual indicator portion 225 may provide a visual indication of the status of the pluggable transceiver module 200. For example, the visual indicator portion 225 may emit a green light when the pluggable transceiver module 200 is operating normally and/or may emit a red light when the pluggable transceiver module 200 is not operating normally. The visual indicator portion 225 may also provide a visual indication of the status of a network connection (established via the cable connector inserted into the port 205). For example, when data (e.g., messages, packets, data packets, signals, etc.) are transmitted to and/or from a network connection established via the pluggable transceiver module and the cable connector inserted into the port 205, the visual indicator portion 225 may blink (e.g., may emit visual light intermittently and/or periodically).

In one embodiment, the pluggable transceiver module 200 includes wires 230. The wires 230 may provide (e.g., transmit) an electrical current and/or signals (e.g., electrical signals or data signals) to the visual indicator portion 225. As illustrated in Figure 2A, the wires 230 are disposed along the housing 210 of the pluggable transceiver module 200. For example, the wires 230 may be parallel to the top edges of the housing 210 of the pluggable transceiver module 200. In one embodiment, the wires 230 may be placed within the housing 210 (as illustrated in Figures 2A through 2C). In other embodiments, the wires 230 (or portions of the wires 230) may be placed anywhere inside and/or outside of the housing 210. Also as illustrated in Figure 2A, portions of the wires 230 are located within the pull tab 220. For example, the pull tab 220 may be a rubber-like material (e.g., rubber, silicone rubber, etc.) that may be formed (e.g., molded) around portions of the wires 230.

The wires 230 may be coupled to a component (e.g., coupled to an LED) of the visual indicator portion 225. The wires 230 may provide power to the visual indicator portion 225. For example, the wires 230 may be coupled to a power source and may provide power to an LED in the visual indicator portion 225 (as illustrated and discussed in more detail below in conjunction with Figure 2B). The wires 230 may also be coupled to the one or more status lines (e.g., wires, electrical connections, pins, etc.). The status lines may be used to indicate the status of the pluggable transceiver module 200. For example, the status lines may be used to transmit a signal, message, bits, and/or other data to indicate that the pluggable transceiver module 200 is operating properly. The status lines may also be used to indicate the status of a network connection (e.g., a physical and/or logical communication channel) established using the pluggable transceiver module 200 and/or a cable connector inserted into the port 205 of the pluggable transceiver module 200. For example, the status lines may be used to transmit a signal, message, bits, and/or other data to indicate that the pluggable transceiver module 200 is transmitting and/or receiving data from the network connection. Although multiple wires 230 are illustrated in Figure 2A, in other embodiments, any number of wires may be used. For example, the pluggable transceiver module 200 may include a single wire or may include five wires to couple an LED with one or status lines and/or data lines. In another example, a single wire may include multiple lines to couple the LED with one or status lines and/or data lines.

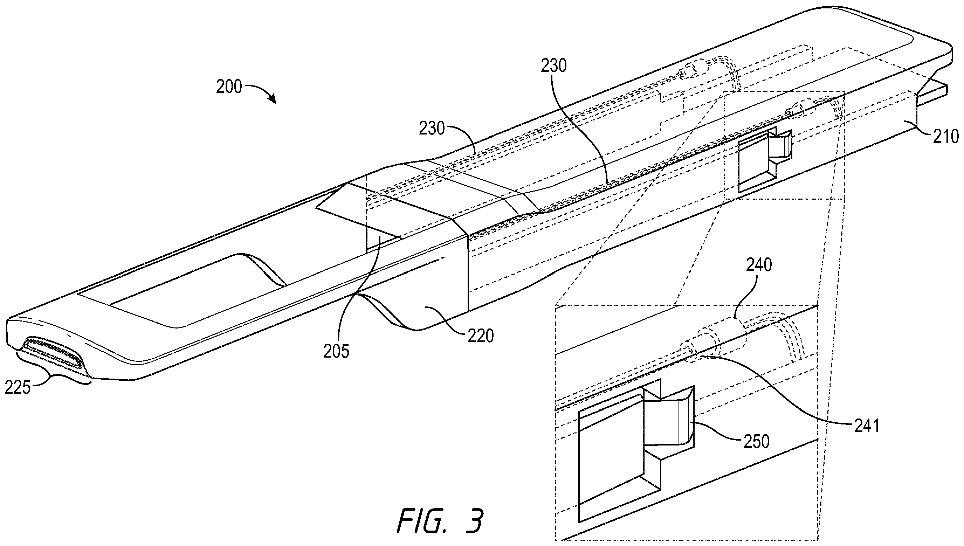

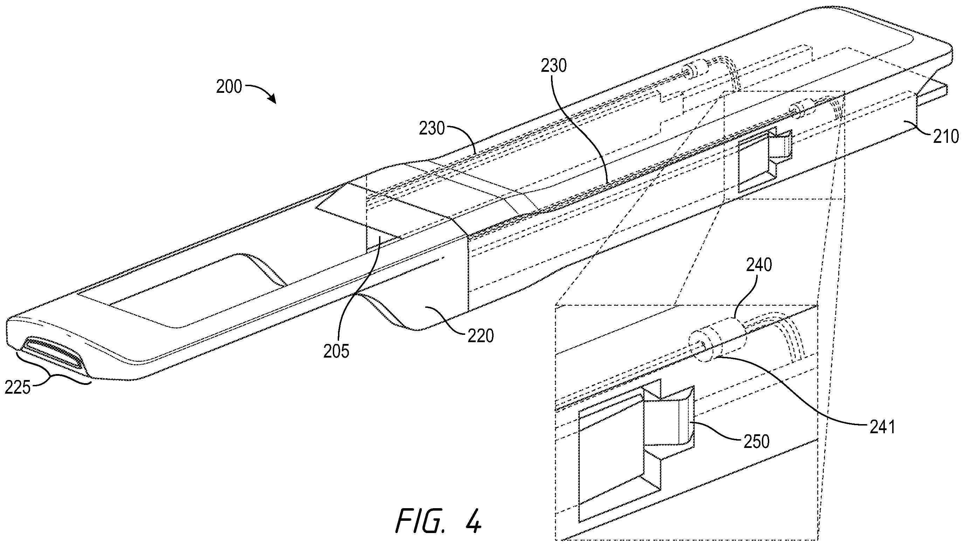

In one embodiment, the pull tab 220 may be movable when a force is exerted on the pull tab 220. For example, the pull tab 220 may move a small distance (e.g., one millimeter, a few millimeters, etc.) when a force is exerted on the pull tab 220 (e.g., when the pull tab 220 is pulled away from the network communication device). The wires 230 may be longer than the distance between the LED and a power source for the LED and/or may be longer than the distance between the LED and the status lines to accommodate the movement of the pull tab 220. For example, the wires 230 may have some slack (e.g., the wires 230 may have an extra length and/or portion) which allows the pull tab 220 to move the small distance without damaging and/or breaking the wires 230 (e.g., the slack in the wires 230 may be decreased when the pull tab 220 is moved). Because the wires 230 may have some slack (e.g., there may be an extra length and/or portion of the wires 230) to allow for the movement of the pull tab 220 when the force is exerted on the pull tab 220, the pluggable transceiver module 200 includes tension components 240 which may reduce the amount of slack on the wires 230 when there is no force exerted on the pull tab 220. In one embodiment, the tension components 240 may include a deformable ring (e.g., a rubber-like ring or a rubber-like gasket) formed around a portion of the wires 230 (as discussed in more detail in conjunction with Figures 3 and 4). In another embodiment, the extra length and/or portion of the wires 230 may be located within the tension components 240.

In other embodiments, the pluggable transceiver module 200 may use light pipes to allow the pull tab 220 to provide a visual indication of the status of a pluggable transceiver module 200 and/or the status of a network connection. For example, the pluggable transceiver module 200 may include LEDs 262. The LEDs 262 may be positioned along the housing 210 (e.g., the LEDs 262 may be positioned inside the housing 210 or may be positioned outside the housing 210). The wires 230 may shortened such that the wires 230 couple the LEDs 262 to the status lines. Portion 231 of the wires 230 may be replaced with light pipes (e.g., fiber optic cables) which may transmit the light emitted (e.g., generated and/or transmitted) by the LEDs 262 to the visual indicator portion 225 of the pull tab 220. In another example, the pluggable transceiver module 200 may include LEDs 261. The LEDs 261 may positioned along the housing 210 (e.g., the LEDs 262 may be positioned inside the housing 210 or may be positioned outside the housing 210). The wires 230 may shortened such that the wires couple the LEDs 262 to the status lines. Portion 232 of the wires 230 may be replaced with light pipes (e.g., fiber optic cables, light tubes, etc.) which may transmit the light emitted (e.g., generated and/or transmitted) by the LEDs 261 to the visual indicator portion 225 of the pull tab 220. Although the present disclosure refers to light pipes, in other embodiments, any type of optical waveguide (e.g., a physical structure that guides electromagnetic waves in the optical spectrum) may be used.

In another embodiment, the pull tab 220 may be a translucent, semi-translucent, transparent, and/or semi-transparent material (e.g., a semi- translucent rubber-like material). The pluggable transceiver module 200 may include LEDs 262 positioned along the housing 210. Wires 230 may be used to couple the LEDs 262 to the status lines and/or a power source. The portion of the wires 230 between the LEDs 262 and the edge of the pull tab 220 may be replaced with light pipes which may transmit the light emitted (e.g., generated and/or transmitted) by the LEDs 262 to the pull tab 220. Because the pull tab 220 may a translucent, semi-translucent, transparent, and/or semi-transparent material, the light emitted by the LEDs 262 and transmitted by the light pipes to the pull tab 220 may be visible through the pull tab 220 (e.g., the entire pull tab 220 may be the visual indicator portion). For example, the light emitted by the LEDs 262 and transmitted by the light pipes to the pull tab 220 may cause the pull tab to glow (e.g., to glow red, green, yellow, etc.).

In one embodiment, the pluggable transceiver module 200 may allow for better airflow through the case of the network communication device. For example, because the pluggable transceiver module 200 includes a visual indicator portion 225 to provide a visual indication of the status of the pluggable transceiver module 200 and/or the status of a network connection, the network communication device may not include LEDs to indicate the status of the status of the pluggable transceiver module 200 and/or the status of a network connection. Removing the LEDs from the face of the network communication device may increase the amount of area on the front face of the network communication device where air may be drawn in. This may increase the cooling of the network communication device 100 (e.g., may allow for better cooling of the inside of the case of the network communication device) by increasing the airflow through the case of the network communication device. In another embodiment, the pluggable transceiver module 200 may allow for better visibility of the visual indication of the status of the pluggable transceiver module 200 and/or the status of a network connection. As discussed above, cables may block the view (e.g., may reduce visibility) of the LEDs on the face of the network communication device. Because the visual indicator portion 225 is located within the pull tab 220, the visual indicator portion 225 may remain visible even when cables are plugged into the ports of the pluggable transceiver module 200.

Figure 2B is a diagram illustrating a portion 270 of the pluggable transceiver module 200 illustrated in Figure 2A, according to one embodiment of the present disclosure. Figure 2B may illustrate a close-up exploded perspective view of a portion of the pull tab 220 before the material for the pull tab 220 (e.g., a rubber-like material) is molded over the wires 230. The portion 270 includes wires 230, an LED 226, and a cover 227. As discussed above, the wires 230 may provide power to the LED 226. The wires 230 may also couple the LED to one or more status lines. This may allow the LED 226 to emit light (e.g., to generate light of a certain color, such a red, green, etc.) and/or to blink intermittently or periodically. Also as discussed above, the LED 226 may emit light and/or blink to provide a visual indication of the status of the pluggable transceiver module 200 and/or to provide a visual indication of the status of a network connection (established via a cable connector). The cover 227 (e.g., a plastic and/or glass cover) may be positioned such that the cover 227 protects the LED 226 from damage. In one embodiment, the cover 227 may be any color (e.g., clear, red, yellow, green etc.).

Figure 2C is a diagram illustrating a portion 280 of the pluggable transceiver module 200 illustrated in Figure 2A, according to another embodiment of the present disclosure. Figure 2C may illustrate a close-up perspective view of a portion of the pull tab 220 after the material for the pull tab 220 (e.g., a rubber-like material) is molded over the wires 230. The portion 280 includes wires (not visible in Figure 2C), an LED (not visible in Figure 2C), and a cover 227. As discussed above, the wires may provide power to the LED and/or the wires may also couple the LED to one or more status lines. The cover 227 (e.g., a plastic and/or glass cover) may be positioned such that the cover 227 protects the LED 226 from damage. In one embodiment, the cover 227 may be any color (e.g., clear, red, yellow, green etc.).

Figure 3 is a diagram illustrating a perspective view of the pluggable transceiver module 200 illustrated in Figure 2A, according to one embodiment of the present disclosure. As discussed above, the pluggable transceiver module 200 includes a housing 210, a port 205, latching components 250, and a pull tab 220. The pull tab 220 may facilitate the removal of the pluggable transceiver module 200 from a slot of a network communication device by disengaging the latching components 250 from the slot of the network communication device when a force is exerted on the pull tab 220. The pluggable transceiver module 200 also includes a visual indicator portion 225 and the visual indicator portion 225 may include an LED.

As discussed above, the pluggable transceiver module 200 may include wires 230 disposed along the housing 210 of the pluggable transceiver module 200. The wires 230 may provide power to an LED in visual indicator portion 225 and/or may be coupled to the one or more status lines used to indicate the status of the pluggable transceiver module 200 or the status of a network connection. The pull tab 220 may be movable when a force is exerted on the pull tab 220 (e.g., the pull tab 220 may move one or more millimeters). The wires 230 may be longer than the distance between the LED and a power source for the LED and/or may be longer than the distance between the LED and the status lines to accommodate the movement of the pull tab 220. The extra length and/or portion of the wires 230 may be located within the tension components 240. Because the wires 230 may have some slack (e.g., there may be an extra length and/or portion of the wires 230) to allow for the movement of the pull tab 220 when the force is exerted on the pull tab 220, the pluggable transceiver module 200 includes tension components 240 which may reduce the amount of slack on the wires 230 when a force is exerted on the pull tab 220.

As illustrated in Figure 3, the tension component 240 may include a deformable ring 241 (e.g., a rubber-like ring or a rubber-like gasket) formed (e.g., molded) around a portion of the wires 230. The deformable ring 241 may be in a first state (e.g., an extended and/or expanded state) because a force has been exerted on the pull tab 220 (e.g., the pull tab 220 is pulled in a direction away from the network communication device). In the first state, the deformable ring 241 may be extended (e.g., expanded or stretched out) to allow the pull tab 220 to move a small distance (e.g., to allow the pull tab to move one or millimeters). The extra length and/or portion of the wires 230 may become more taut (e.g., less slack) because the movement of the pull tab 220 may pull the wires 230 in the direction of the force exerted on the pull tab 220 (e.g., may pull the wires 230 in a direction away from the network communication device). Although a deformable ring 241 is illustrated in Figure 3, in other embodiments the tension component 240 may use various other components such as tabs, prongs, notches, ridges, latches, grooves, openings, springs, wheels, gears, etc., to allow the wires 230 to move when a force is exerted on the pull tab 220.

Figure 4 is a diagram illustrating a perspective view of the pluggable transceiver module 200 illustrated in Figure 2A, according to another embodiment of the present disclosure. As discussed above, the pluggable transceiver module 200 includes a housing 210, a port 205, latching components 250, and a pull tab 220. The pull tab 220 may facilitate the removal of the pluggable transceiver module 200 from the slot of the network communication device by disengaging the latching components 250 from a slot of a network communication device when a force is exerted on the pull tab 220. The pluggable transceiver module 200 also includes a visual indicator portion 225 and the visual indicator portion 225 may include an LED. The pluggable transceiver module 200 may include wires 230 disposed along the housing 210 of the pluggable transceiver module 200 (e.g., to provide power to an LED in visual indicator portion 225 and/or to indicate the status of the pluggable transceiver module 200 and/or the status of a network connection). The pull tab 220 may be movable when a force is exerted on the pull tab 220. The wires 230 may be longer than the distance between the LED and a power source for the LED and/or may be longer than the distance between the LED and the status lines to accommodate the movement of the pull tab 220. Because the wires 230 may have some slack to allow for the movement of the pull tab 220 when the force is exerted on the pull tab 220, the pluggable transceiver module 200 includes tension components 240 which may create slack on the wires 230 when there is no force exerted on the pull tab 220.

As discussed above, the tension component 240 may include a deformable ring 241 (e.g., a rubber-like ring or a rubber-like gasket) formed around a portion of the wires 230. As illustrated in Figure 4, the deformable ring 241 may be in a second state (e.g., a retracted and/or withdrawn state) because no force is exerted on the pull tab 220 (e.g., the pull tab 220 is not pulled in a direction away from the network communication device). In the second state, the deformable ring 241 may be retracted (e.g., withdrawn or pulled back) to create slack in the wires 230. In one embodiment, the extra length and/or portion of the wires 230 (e.g., the slack in the wires 230) may be located within the tension component 240. Although a deformable ring 241 is illustrated in Figure 4, in other embodiments the tension component 240 may use various other components such as tabs, notches, ridges, latches, grooves, openings, springs, wheels, gears, etc., to allow the tension component 240 to create slack in the wires 230 when no force is exerted on the pull tab 220.

In one embodiment, the deformable ring 241 may change from the second state (e.g., the retracted and/or withdrawn state) to the first state (e.g., the extended and/or expanded state illustrated in Figure 3) when a force is exerted on the pull tab 220 (e.g., when the pull tab 220 is pulled in a direction away from the network communication device). In another embodiment, the deformable ring 241 may change from the first state (e.g., the extended and/or expanded state illustrated in Figure 3) to the second state (e.g., the retracted and/or withdrawn state illustrated in Figure 4) when a force is no longer exerted on the pull tab 220 (e.g., when the pull tab 220 is released).

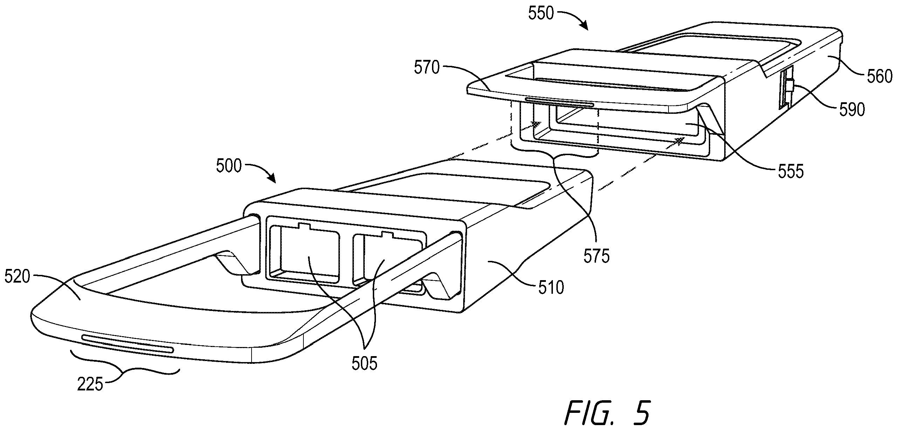

Figure 5 is a diagram illustrating a perspective view of a pluggable transceiver module 500 and an adaptor module 550, according to one embodiment of the present disclosure. The pluggable transceiver module 500 includes a housing 510. The housing 510 may have a form factor that allows the pluggable transceiver module 500 to be placed in the slot of a first network communication device. The housing 510 includes ports 505 that allow cable connectors to be inserted into the pluggable transceiver module 500. The pluggable transceiver module 500 may also include latching components (not shown in Figure 5) that may help secure the pluggable transceiver module 500 in the slot of the first network communication device. The pluggable transceiver module 500 also includes a pull tab 520. The pull tab 520 may facilitate the removal of the pluggable transceiver module 500 from the slot of the first network communication device by disengaging the latching components of the pluggable transceiver module 500 when a force is exerted on the pull tab 520. The pluggable transceiver module 500 also includes a visual indicator portion 525 and the visual indicator portion 525 may include an LED. The visual indicator portion 525 may emit visual light in one or more different colors and/or may also emit visual light intermittently and/or periodically. The visual indicator portion 525 may provide a visual indication of the status of the pluggable transceiver module 500 and/or may provide a visual indication of the status of a network connection. In one embodiment, the latching components of the pluggable transceiver module 500 may help secure the pluggable transceiver module 500 within the port 555 of the adaptor module 550. The latching components may be disengaged when a force is exerted on the pull tab 520. This may allow the pluggable transceiver module 500 to be removed from the port 555 of the adaptor module 550.

In one embodiment, the adaptor module 550 may include components similar to the pluggable transceiver module 200 illustrated in Figures 2A, 2B, 2C, 3, and 4. For example, the adaptor module 550 includes a housing 560. The housing 560 may have a form factor that allows the adaptor module 550 to be placed in the slot of a second network communication device. The housing 560 includes a port 555 that allows the pluggable transceiver module 500 to be inserted into the adaptor module 550. The adaptor module 550 may also include latching components 590 that may help secure the adaptor module 550 in the slot of the second network communication device. The adaptor module 550 also includes a pull tab 570. The pull tab 570 may facilitate the removal of the adaptor module 550 from the slot of the second network communication device by disengaging the latching components 590 of the adaptor module 550 when a force is exerted on the pull tab 570. The adaptor module 550 also includes a visual indicator portion 575 and the visual indicator portion 575 may include an LED. The visual indicator portion 575 may emit visual light in one or more different colors and/or may also emit visual light intermittently and/or periodically. The visual indicator portion 575 may provide a visual indication of the status of the adaptor module 550 and/or may provide a visual indication of the status of a network connection.

The adaptor module 550 may also include wires (not shown in Figure 5) disposed along the housing 560 of the adaptor module 550. The wires may provide power to an LED in the visual indicator portion 575 and/or may be coupled to the one or more data lines used to determine whether the pluggable transceiver module 500 is compatible with the adaptor module 550. The pull tab 570 may be movable when a force is exerted on the pull tab 570 (e.g., the pull tab may move one or more millimeters). The wires may be longer than the distance between the LED and the data lines and/or power source for the LED to accommodate the movement of the pull tab 570.

Because the wires may have some slack (e.g., there may be an extra length and/or portion of the wires) to allow for the movement of the pull tab 570 when the force is exerted on the pull tab 570, the adaptor module 550 includes tension components (not shown in Figure 5) which may create slack on the wires when there is no force exerted on the pull tab 570. For example, the adaptor module 550 may include a tension component that includes a deformable ring (e.g., similar to deformable ring 241 illustrated in Figures 3 and 4). The extra length and/or portion of the wires may be located within tension components. The deformable ring may change to a first state (e.g., an extended and/or expanded state) when a force is exerted on the pull tab 570. The extra length and/or portion of the wires may become more taut (e.g., less slack) because the movement of the pull tab 570 may pull the wires in the direction of the force exerted on the pull tab 570. The deformable ring may also change to a second state (e.g., a retracted and/or withdrawn state) when no force is exerted on the pull tab 570. In the second state, the deformable ring may be retracted (e.g., withdrawn or pulled back) to create slack in the wires.

In other embodiments, the adaptor module 550 may include light pipes to allow the pull tab 570 to provide a visual indication of the status of whether the pluggable transceiver module 500 is compatible with the adaptor module 550. For example, the adaptor module 550 may include one or more LEDs positioned along the housing 560. The adaptor module 550 may use light pipes (positioned along the housing 560) that may transmit the light emitted (e.g., generated and/or transmitted) by the LEDs to the visual indicator portion 575 of the pull tab 570. In one embodiment, the pull tab 570 may be a translucent, semi-translucent, transparent, and/or semi-transparent material (e.g., a semi- translucent rubber-like material). Because the pull tab 570 may a translucent, semi-translucent, transparent, and/or semi-transparent material, the light emitted by the LEDs and transmitted by the light pipes to the pull tab 570 may be visible through the pull tab 570 (e.g., the entire pull tab 570 may be the visual indicator portion).

In one embodiment, the adaptor module 550 may be a module, component, and/or device that allows the pluggable transceiver module 500 to be used in a second network communication device. For example, the housing 510 of the pluggable transceiver module 500 may not fit within the slots of the second network communication device (e.g., the form factor of the pluggable transceiver module 500 may not fit within the slots of the second network communication device). The adaptor module 550 includes a port 555 that is configured to receive the pluggable transceiver module 500. For example, the port 555 may have the same form factor (e.g., dimensions such as height, width, length) as the pluggable transceiver module 500. The pluggable transceiver module 500 may be inserted into the port 555 of the adaptor module 550 as indicated by the dashed arrows in Figure 5. The housing 560 of the adaptor module 550 may be configured to fit within the slots of the second network communication device. This may allow the second network communication device to use the pluggable transceiver module 500 even though the pluggable transceiver module 500 may not fit within the slots of the second network communication device.

In another embodiment, certain types of pluggable transceiver modules may not be compatible with different types of network communication devices and/or adaptor modules even though the pluggable transceiver module may fit within the ports of the adaptor modules. Although the pluggable transceiver module 500 may fit within the port 555, the pluggable transceiver module 500 may be unusable by the adaptor module and/or the second network communication device. For example, the second network communication device may use optical transceiver modules (e.g., pluggable transceiver modules that use fiber optic cables) and the pluggable transceiver module 500 may be a copper transceiver module (e.g., a pluggable transceiver module that uses copper cables, such as Ethernet cables). In another example, the data lines for the pluggable transceiver module 500 may not be compatible and/or usable with the adaptor module 550 (e.g., the number and/or position of the data lines is different between the pluggable transceiver module 500 and the adaptor module 550). The visual indicator portion 575 may emit light of different colors and/or may blink (e.g., periodically and/or intermittently emit light) to indicate whether the pluggable transceiver module 500 is compatible with the adaptor module 550. For example, the visual indicator portion 575 may emit a green light if the pluggable transceiver module 500 is compatible with the adaptor module 550 and the visual indicator portion 575 may emit a red light if the pluggable transceiver module 500 is not compatible with the adaptor module 550.

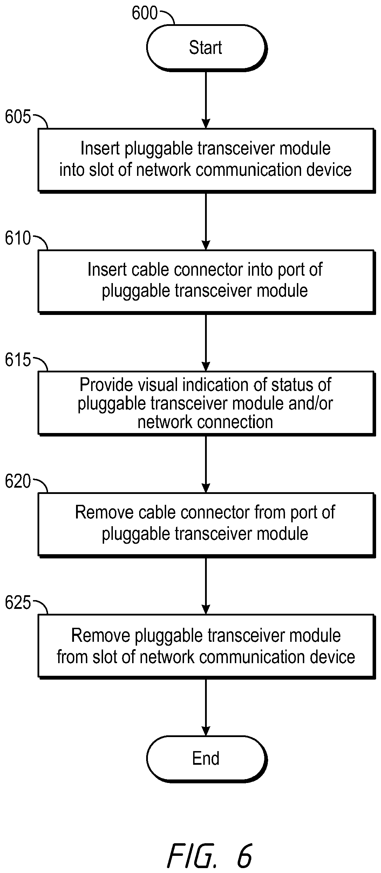

Figure 6 is a flowchart representation of a method 600 of using a pluggable transceiver module having one or more features as described herein, according to one embodiment of the present disclosure. The method 600 begins at block 605 where a pluggable transceiver module is inserted into a slot of a network communication device. For example, referring to Figure 2, the pluggable transceiver module 200 may be inserted into a slot of a network communication device. In one embodiment, the pluggable transceiver module may include a pull tab that may have a visual indicator portion to provide a visual indication of the status of a pluggable transceiver module and/or the status of a network connection. The pluggable transceiver module may also include one or more LEDs, one or more wires, one or more light pipes, one or more latching components, and/or one or more tension components.

At block 610, a cable connector is inserted into the port of the pluggable transceiver module. A visual indication of the status of the pluggable transceiver module and/or the status of a network connection established via the cable connector may be provided by the visual indicator portion at block 615. For example, the visual indicator portion may include an LED that may emit different colors of light and/or may blink (as discussed above). At block 620, the cable connector is removed from the port of the pluggable transceiver module. At block 625, the pluggable transceiver module is removed from the slot of the network connection device. For example, a force may be exerted on the pull tab of the pluggable transceiver module which may disengage the latch components of the pluggable transceiver module (as discussed above). After block 625, the method 600 ends.

The present disclosure describes various features, no single one of which is solely responsible for the benefits described herein. It will be understood that various features described herein may be combined, modified, or omitted, as would be apparent to one of ordinary skill. Other combinations and sub-combinations than those specifically described herein will be apparent to one of ordinary skill, and are intended to form a part of this disclosure. Various methods are described herein in connection with various flowchart steps and/or phases. It will be understood that in many cases, certain steps and/or phases may be combined together such that multiple steps and/or phases shown in the flowcharts can be performed as a single step and/or phase. Also, certain steps and/or phases can be broken into additional sub-components to be performed separately. In some instances, the order of the steps and/or phases can be rearranged and certain steps and/or phases may be omitted entirely. Also, the methods described herein are to be understood to be open-ended, such that additional steps and/or phases to those shown and described herein can also be performed.

Unless the context clearly requires otherwise, throughout the description and the claims, the words "comprise," "comprising," and the like are to be construed in an inclusive sense, as opposed to an exclusive or exhaustive sense; that is to say, in the sense of "including, but not limited to." The word "coupled", as generally used herein, refers to two or more elements that may be either directly connected, or connected by way of one or more intermediate elements. Additionally, the words "herein," "above," "below," and words of similar import, when used in this application, shall refer to this application as a whole and not to any particular portions of this application. Where the context permits, words in the above Detailed Description using the singular or plural number may also include the plural or singular number respectively. The word "or" in reference to a list of two or more items, that word covers all of the following interpretations of the word: any of the items in the list, all of the items in the list, and any combination of the items in the list. The word "exemplary" is used exclusively herein to mean "serving as an example, instance, or illustration." Any implementation described herein as "exemplary" is not necessarily to be construed as preferred or advantageous over other implementations.

It will also be understood that, although the terms "first," "second," etc. may be used herein to describe various elements, these elements should not be limited by these terms. These terms are only used to distinguish one element from another. For example, a first contact could be termed a second contact, and, similarly, a second contact could be termed a first contact, which changing the meaning of the description, so long as all occurrences of the "first contact" are renamed consistently and all occurrences of the second contact are renamed consistently. The first contact and the second contact are both contacts, but they are not the same contact. Also as used in the description of the embodiments and the appended claims, the singular forms "a", "an" and "the" are intended to include the plural forms as well, unless the context clearly indicates otherwise. It will also be understood that the term "and/or" as used herein refers to and encompasses any and all possible combinations of one or more of the associated listed items.

Further as used herein, the term "if' may be construed to mean "when" or "upon" or "in response to determining" or "in accordance with a determination" or "in response to detecting," that a stated condition precedent is true, depending on the context. Similarly, the phrase "if it is determined [that a stated condition precedent is true]" or "if [a stated condition precedent is true]" or "when [a stated condition precedent is true]" may be construed to mean "upon determining" or "in response to determining" or "in accordance with a determination" or "upon detecting" or "in response to detecting" that the stated condition precedent is true, depending on the context.

The disclosure is not intended to be limited to the implementations shown herein. Various modifications to the implementations described in this disclosure may be readily apparent to those skilled in the art, and the generic principles defined herein may be applied to other implementations without departing from the scope of this disclosure. The teachings of the invention provided herein can be applied to other methods and systems, and are not limited to the methods and systems described above, and elements and acts of the various embodiments described above can be combined to provide further embodiments.

## Claims

1. A pluggable transceiver module (200), comprising:
a housing (210) comprising a port (205) to receive a pluggable cable connector, the housing configured to fit within a slot (110) of a network communication device (100);
a pull tab (220) configured to facilitate removal of the pluggable transceiver module (200) from the network communication device (100), at least a portion of the pull tab (220) disposed on the outside of the housing (210), the pluggable transceiver module **characterized in that** the pull tab (220) is comprising a visual indicator portion (225) comprising a light emitting diode, LED, (226) at an end away from the network communication device, the visual indicator portion (225) configured to provide a visual indication of a status of the pluggable transceiver module (200); and **in that**
one or more wires (230) are at least partially disposed within the pull tab (220), the one or more wires (230) configured to couple the LED to the network communication device (100).

2. The module of claim 1, wherein the status of the pluggable transceiver module includes a status of a network connection established via the pluggable transceiver module.

3. An adaptor module (550), the adaptor module comprising:
a housing (560) comprising a port (555) to receive a pluggable transceiver module (500), the housing (560) configured to fit within a slot (110) of a network communication device (100); and
a pull tab (570) configured to facilitate removal of the adaptor module (550) from the network communication device (100), at least a portion of the pull tab (570) disposed on the outside of the housing (560), the adapter module **characterized in that** the pull tab (570) is comprising a visual indicator portion (575) comprising a light emitting diode, LED, at an end away from the network communication device (100), the visual indicator portion (575) configured to provide a visual indication of whether the pluggable transceiver module (500) is compatible with the adaptor module (550); and **in that**
one or more wires are at least partially disposed within the pull tab (570), the one or more wires configured to couple the LED to the network communication device (100).

4. The adaptor module of claim 3, wherein the port is configured to receive the pluggable transceiver module of either claim 1 or claim 2.

5. The module of any one of claims 1 to 4, further comprising:
a tension component configured to accommodate a change of slack of the one or more wires.

6. The module of any one of claims 1 to 4, further comprising:
a latch component configured to secure the module in the network communication device when the module is inserted into the network communication device.

7. The module of claim 6, wherein the pull tab is configured to disengage the latch component when a force is exerted on the pull tab in the direction away from the network communication device.

8. The module of any one of claims 1 to 4, wherein the pluggable transceiver module comprises a copper transceiver module or an optical transceiver module.

9. The module of any one of claims 1 to 4, wherein the one or more wires includes a power wire configured to provide power from the network communication device to the LED.

10. The module of any one of claims 1 to 4, wherein the one or more wires includes a status wire configured to provide status data from the network communication device to the LED.

11. A method of using a pluggable transceiver module according to any one of claims 1 or 2, or claims 5 to 10 when dependent on claim 1, the method comprising:
inserting (605) the pluggable transceiver module into a slot of a network communication device; and
inserting (610) the pluggable cable connector into the port of the pluggable transceiver module.

12. A method of using an adapter module according to any one of claims 3 or 4, or claims 5 to 10 when dependent on claim 3, the method comprising:
inserting the adapter module into a slot of a network communication device; and
inserting the pluggable transceiver module into the port of the adapter module.

13. The method of claim 11 or 12, wherein, in response to a force being exerted on the pull tab in the direction away from the network communication device, the LED is moved away from the port in the direction away from the network communication device, a slack of the one or more wires is reduced by a tension component, and a latch component of the module is disengaged.

## Patentansprüche

1. Steckbares Sendeempfängermodul (200), das Folgendes umfasst:
ein Gehäuse (210) mit einem Port (205) zur Aufnahme eines steckbaren Kabelverbinders, wobei das Gehäuse dafür konfiguriert ist, in einen Schlitz (110) einer Netzwerkkommunikationsvorrichtung (100) zu passen;
eine Zuglasche (220), die dafür konfiguriert ist, das Entfernen des steckbaren Sendeempfängermoduls (200) von der Netzwerkkommunikationsvorrichtung (100) zu erleichtern, wobei mindestens ein Teil der Zuglasche (220) an der Außenseite des Gehäuses (210) angeordnet ist, wobei das steckbare Sendeempfängermodul **dadurch gekennzeichnet ist, dass** die Zuglasche (220) einen Sichtanzeigeabschnitt (225) umfasst, der an einem von der Netzwerkkommunikationsvorrichtung entfernten Ende eine Leuchtdiode, LED, (226) umfasst, wobei der Sichtanzeigeabschnitt (225) dafür konfiguriert ist, eine Sichtanzeige eines Status des steckbaren Sendeempfängermoduls (200) bereitzustellen; und dass ein oder mehrere Drähte (230) zumindest teilweise innerhalb der Zuglasche (220) angeordnet sind, wobei der eine oder die mehreren Drähte (230) dafür konfiguriert sind, die LED mit der Netzwerkkommunikationsvorrichtung (100) zu koppeln.

2. Modul nach Anspruch 1, wobei der Status des steckbaren Sendeempfängermoduls einen Status einer Netzwerkverbindung umfasst, die über das steckbare Sendeempfängermodul hergestellt wird.

3. Adaptermodul (550), wobei das Adaptermodul Folgendes umfasst:
ein Gehäuse (560) mit einem Port (555) zur Aufnahme eines steckbaren Sendeempfängermoduls (500), wobei das Gehäuse (560) dafür konfiguriert ist, in einen Schlitz (110) einer Netzwerkkommunikationsvorrichtung (100) zu passen; und
eine Zuglasche (570), die dafür konfiguriert ist, das Entfernen des Adaptermoduls (550) aus der Netzwerkkommunikationsvorrichtung (100) zu erleichtern; wobei mindestens ein Teil der Zuglasche (570) an der Außenseite des Gehäuses (560) angeordnet ist,
wobei das Adaptermodul **dadurch gekennzeichnet ist, dass** die Zuglasche (570) einen Sichtanzeigeabschnitt (575) umfasst, der an einem von der Netzwerkkommunikationsvorrichtung (100) entfernten Ende eine lichtemittierende Diode, LED, umfasst,
wobei der Sichtanzeigeabschnitt (575) dafür konfiguriert ist, eine Sichtanzeige bereitzustellen, die anzeigt, ob das steckbare Sendeempfängermodul (500) mit dem Adaptermodul (550) kompatibel ist; und dass ein oder mehrere Drähte zumindest teilweise innerhalb der Zuglasche (570) angeordnet sind, wobei der eine oder die mehreren Drähte dafür konfiguriert sind, die LED mit der Netzwerkkommunikationsvorrichtung (100) zu koppeln.

4. Adaptermodul nach Anspruch 3, wobei der Port dafür konfiguriert ist, das steckbare Sendeempfängermodul nach Anspruch 1 oder Anspruch 2 aufzunehmen.

5. Modul nach einem der Ansprüche 1 bis 4, das ferner Folgendes umfasst:
eine Spannungskomponente, die dafür konfiguriert ist, eine Änderung des Durchhangs eines oder mehrerer Drähte aufzunehmen.

6. Modul nach einem der Ansprüche 1 bis 4, das ferner Folgendes umfasst:
eine Verriegelungskomponente, die dafür konfiguriert ist, das Modul in der Netzwerkkommunikationsvorrichtung zu sichern, wenn das Modul in die Netzwerkkommunikationsvorrichtung eingesetzt wird.

7. Modul nach Anspruch 6, wobei die Zuglasche dafür konfiguriert ist, die Verriegelungskomponente außer Eingriff zu bringen, wenn eine Kraft in Richtung weg von der Netzwerkkommunikationsvorrichtung auf die Zuglasche ausgeübt wird.

8. Modul nach einem der Ansprüche 1 bis 4, wobei das steckbare Sendeempfängermodul ein Kupfer-Sendeempfängermodul oder ein optisches Sendeempfängermodul umfasst.

9. Modul nach einem der Ansprüche 1 bis 4, wobei der eine oder die mehreren Drähte einen Stromdraht umfassen, der dafür konfiguriert ist, der LED Strom von der Netzwerkkommunikationsvorrichtung bereitzustellen.

10. Modul nach einem der Ansprüche 1 bis 4, wobei die eine oder die mehreren Drähte einen Statusdraht umfassen, der dafür konfiguriert ist, der LED Statusdaten von der Netzwerkkommunikationsvorrichtung bereitzustellen.

11. Verfahren zum Verwenden eines steckbaren Sendeempfängermoduls nach einem der Ansprüche 1 oder 2 oder den Ansprüchen 5 bis 10, sofern von Anspruch 1 abhängig, wobei das Verfahren Folgendes umfasst:
Einstecken (605) des steckbaren Sendeempfängermoduls in einen Steckplatz einer Netzwerkkommunikationsvorrichtung; und
Einstecken (610) des steckbaren Kabelsteckers in den Port des steckbaren Sendeempfängermoduls.

12. Verfahren zur Verwendung eines Adaptermoduls nach einem der Ansprüche 3 oder 4 oder den Ansprüchen 5 bis 10 in Abhängigkeit von Anspruch 3, wobei das Verfahren Folgendes umfasst:
Einstecken des Adaptermoduls in einen Steckplatz einer Netzwerkkommunikationsvorrichtung; und
Einstecken des steckbaren Sendeempfänger-Moduls in den Port des Adaptermoduls.

13. Verfahren nach Anspruch 11 oder Anspruch 12, wobei, als Reaktion auf eine Kraft, die auf die Zuglasche in Richtung von der Netzwerkkommunikationsvorrichtung weg ausgeübt wird, die LED von dem Port von der Netzwerkkommunikationsvorrichtung wegbewegt wird, ein Durchhang des einen oder der mehreren Drähte durch eine Spannungskomponente verringert wird und eine Verriegelungskomponente des Moduls außer Eingriff gebracht wird.

## Revendications

1. Module formant émetteur-récepteur enfichable (200), comportant :
un boîtier (210) comportant un port (205) servant à recevoir un connecteur de câble enfichable, le boîtier étant configuré à des fins d'adaptation dans une fente (110) d'un dispositif de communication de réseau (100) ;
une tirette (220) configurée pour faciliter le retrait du module formant émetteur-récepteur enfichable (200) en provenance du dispositif de communication de réseau (100), au moins une partie de la tirette (220) étant disposée sur la partie extérieure du boîtier (210), le module formant émetteur-récepteur enfichable étant **caractérisé en ce que** la tirette (220) comporte une partie formant indicateur visuel (225) comportant une diode électroluminescente, DEL, (226) au niveau d'une extrémité à l'opposé du dispositif de communication de réseau, la partie formant indicateur visuel (225) étant configurée pour fournir une indication visuelle d'un statut du module formant émetteur-récepteur enfichable (200) ; et **en ce qu'**un ou plusieurs fils (230) sont disposés au moins partiellement à l'intérieur de la tirette (220), lesdits un ou plusieurs fils (230) étant configurés pour accoupler la DEL au dispositif de communication de réseau (100) .

2. Module selon la revendication 1, dans lequel le statut du module formant émetteur-récepteur enfichable comprend un statut d'une connexion de réseau établie par le biais du module formant émetteur-récepteur enfichable.

3. Module formant adaptateur (550), le module formant adaptateur comportant :
un boîtier (560) comportant un port (555) servant à recevoir un module formant émetteur-récepteur enfichable (500), le boîtier (560) étant configuré à des fins d'adaptation dans une fente (110) d'un dispositif de communication de réseau (100) ; et
une tirette (570) configurée pour faciliter le retrait du module formant adaptateur (550) en provenance du dispositif de communication de réseau (100), au moins une partie de la tirette (570) étant disposée sur la partie extérieure du boîtier (560), le module formant adaptateur étant **caractérisé en ce que** la tirette (570) comporte une partie formant indicateur visuel (575) comportant une diode électroluminescente, DEL, au niveau d'une extrémité à l'opposé du dispositif de communication de réseau (100), la partie formant indicateur visuel (575) étant configurée pour fournir une indication visuelle comme quoi le module formant émetteur-récepteur enfichable (500) est compatible avec le module formant adaptateur (550) ; et **en ce qu'**un ou plusieurs fils sont disposés au moins partiellement à l'intérieur de la tirette (570), lesdits un ou plusieurs fils étant configurés pour accoupler la DEL au dispositif de communication de réseau (100).

4. Module formant adaptateur selon la revendication 3, dans lequel le port est configuré pour recevoir le module formant émetteur-récepteur enfichable selon l'une ou l'autre parmi la revendication 1 ou la revendication 2.

5. Module selon l'une quelconque des revendications 1 à 4, comportant par ailleurs :
un composant de tension configuré pour tenir compte d'un changement de jeu desdits un ou plusieurs fils.

6. Module selon l'une quelconque des revendications 1 à 4, comportant par ailleurs :
un composant de verrouillage configuré pour assujettir le module dans le dispositif de communication de réseau quand le module est inséré dans le dispositif de communication de réseau.

7. Module selon la revendication 6, dans lequel la tirette est configurée pour séparer le composant de verrouillage quand une force est exercée sur la tirette dans la direction allant à l'opposé du dispositif de communication de réseau.

8. Module selon l'une quelconque des revendications 1 à 4, dans lequel le module formant émetteur-récepteur enfichable comporte un module formant émetteur-récepteur en cuivre ou un module formant émetteur-récepteur optique.

9. Module selon l'une quelconque des revendications 1 à 4, dans lequel lesdits un ou plusieurs fils comprennent un fil d'alimentation configuré pour fournir de l'énergie en provenance du dispositif de communication de réseau à la DEL.

10. Module selon l'une quelconque des revendications 1 à 4, dans lequel lesdits un ou plusieurs fils comprennent un fil de statut configuré pour fournir des données de statut en provenance du dispositif de communication de réseau à la DEL.

11. Procédé d'utilisation d'un module formant émetteur-récepteur enfichable selon l'une quelconque des revendications 1 ou 2, ou des revendications 5 à 10 quand dépendantes de la revendication 1, le procédé comportant les étapes consistant à :
insérer (605) le module formant émetteur-récepteur enfichable dans une fente d'un dispositif de communication de réseau ; et
insérer (610) le connecteur de câble enfichable dans le port du module formant émetteur-récepteur enfichable.

12. Procédé d'utilisation d'un module formant adaptateur selon l'une quelconque des revendications 3 ou 4, ou des revendications 5 à 10 quand dépendantes de la revendication 3, le procédé comportant les étapes consistant à :
insérer le module formant adaptateur dans une fente d'un dispositif de communication de réseau ; et
insérer le module formant émetteur-récepteur enfichable dans le port du module formant adaptateur.

13. Procédé selon la revendication 11 ou la revendication 12, dans lequel, en réponse à une force qui est exercée sur la tirette dans la direction allant à l'opposé du dispositif de communication de réseau, la DEL est déplacée à l'opposé du port dans la direction allant à l'opposé du dispositif de communication de réseau, un jeu desdits un ou plusieurs fils est réduit par un composant de tension, et un composant de verrouillage du module est séparé.
